# EUROPEAN PATENT SPECIFICATION

(11) **EP 3 152 460 B1**
(45) Date of publication and mention of the grant of the patent: **18.09.2019**
(21) Application number: 15734439.1
(22) Date of filing: 28.05.2015
(51) Int. Cl.: F16G 13/16

(54) **ENERGY CHAIN ELEMENT WITH CROSSPIECE**
ENERGIEKETTENELEMENT MIT QUERSTÜCK
ÉLÉMENT DE CHAÎNE PORTE-CÂBLES AVEC TRAVERSE

(30) Priority: 03.06.2014 IT MI20141019
(43) Date of publication of application: 12.04.2017
(73) Proprietor: Findalto S.r.l., 20900 Monza (IT)
(72) Inventor: MAURI, Giovanni, I-20900 Monza (IT)
(74) Representative: Riccardi, Sergio
(86) International application number: PCT/IB2015/000825
(87) International publication number: WO 2015/185978

(56) References cited:
- WO-A1-00/63586
- WO-A1-2005/036025
- WO-A1-2007/076987
- DE-A1-102008 015 954
- DE-U1-202011 004 762

## Description

The present invention relates to an energy chain element comprising a system for opening/closing components of energy chains, more particularly closure lids of energy cable chain links, included in a chain element of an energy chain consisting of a plurality of chain elements constituting the inner guide channel receiving cables and like members inside the chain.

It is well known that said chains, comprising a variable number of elements according to the chain length, allow a limited access to the cables or similar members that said chain is able to carry and/or to guide.

Each chain element comprises one or more modular pieces which are mutually connected to guide and hold the cables arranged in the chain guide channel. Such a system is obviously designed to undergo a great number of cycles, and as the chain elements and links undergo wear, even the cables or other members inside the chain undergo a continuous tensile stress and more particularly bending stress as well as a partial friction between the cables.

It is known that insertion of said cables or other members adapted to be carried by said cable chains, occurs during the first stage of installing the system, during the structure assembling. This is generally a complex time-consuming operation, that may comprise insertion of cables or elements of any length, thus making this operation long and delicate, requiring even more operators and machinery adapted for this purpose. Once the cables are initially positioned, the system is installed and set at work, thus it is clear that the subsequent care and attention will be focused on maintenance, durability and correct operation of the system.

With regard more particularly to maintenance of the cable chain system, it is apparent that access to the cables disposed inside the chain system, is of the utmost importance in order to check possible wear, failure or deterioration with consequent malfunctioning of the cables, that obviously affects the whole operation of the system. Indeed it is obvious that in case of failure of one of said cables, problems in the system operation may occur at once or later on, with consequent system shutdown. More particularly it is difficult to identify which cable is malfunctioning, but even more difficult is to have access to said cable inside the chain, in order to proceed to its repair or replacement.

Obviously this particularly important technical problem was widely discussed and led to many technical solutions proposed in the prior art, most of them disclosing chain links made of several elements, of which at least an upper or lower element, generally referred to as crosspiece, and now widely known as lid, can be opened. This lid is easily accessible, designed to be easily opened and simplify the wiring operations for replacing or repairing the cables or other elements arranged in the channel.

Lids made of plastics, aluminum or other material adapted to the purpose of the present invention are known, with pressure or fixed joint, which can be opened by suitable means such as a screwdriver. Such a lid may be designed so as to be opened on both the inner side and the outer side of chain radius, on only at one side, when the other side has to be hinged, as illustrated in the accompanying drawings.

In any case, whichever might be the direction or senses (when the lids are disposed on both sides of the chain element) of opening said lid, it is possible to open it, possibly by rotation or extraction, partially or entirely, and at the same time to remove it partially or entirely from the chain link, so as to take possible action in said inner space. More particularly it is possible to rotate the lid around a possible constraint such as a hinge, arranged on one of the two sides of the chain element, thus making said crosspiece not releasable from the link, but easy to be opened by rotation. In this case it is not advantageous to choose during assembly of the chain and related links, which side of the crosspiece should be hinged. In addition, in case of lid failure, since one side of the lid is constrained with the link, the replacement operation is particularly burdensome, since the hinge obliges to disassemble and replace the element, namely the link, and this increases the servicing time. It is even possible that replacement of the whole chain element is needed, with consequent time and money expenditure.

However, in case of fixed engagement or joint on both sides of the chain link of a shaped member, e.g. integral with the crosspiece, like the known tongue of aluminum or plastics, it is clearly necessary in the opening operation to disassemble both sides of the lids, or to press on the portion of the chain link generally provided with a reinforced larger base, properly shaped for receiving said lid by fitting. Indeed in this case none of the insertion constraints can be rotated since they are fixed. Consequently in order to have room for acceding the channel, the joint must be released on both link sides, otherwise there is the risk of a rotation stress on a fixed plastic member and its probable break. In this case use of a tool is required, such as the mentioned screwdriver, in order to press on both fixed joints of said lid or crosspiece on said link.

It has to be noted that most types of lid achieve its insertion by joining elastic members formed on the lid with recess members formed on a suitable possibly reinforced portion complementary with the chain link or integral therewith.

Thus it is clear that use of means causing stress to release said plastic tongue from said recess, generally made of a similar material such as plastics, occurs whenever the lid should be opened. Repetition of said stress, if exerted permanently, leads to a quick wear of the members, with consequences such as break of the lid joint tongue, or wear and deformation of the preformed recess, which will be no more able to hold fixed the lid.

Chain link lids are for instance known provided with one or more joining recesses made directly on the chain link, wherein said crosspieces or lids may be released through pressure exerted for instance by a screwdriver, and may be rotated around a releasable hinge made on the opposite side of the link. Also in this case, although it would be possible to achieve even large rotation angles (e.g. 180 degrees) of the crosspiece, in order to release the other side of the crosspiece, it is necessary to use again said tool, with the above mentioned problems of quick wear of the materials. It is also to be noted that the recesses are made directly in the link body, so that wear occurs directly on the link body and not on the recess just designed to receive the ends of said lid, with greater risk of link breakage, and it is clear that replacement of a link is much more expensive than change of a lid.

Alternatively, by recognizing the objective difficulty of releasing the lid from the chain link, with an action that on the one hand is deliberately non-accidental but on the other hand causes quick wear of the members, other lids are known where the difficulty of lid engagement/disengagement was reduced, e.g. by providing lid insertion areas on one or both chain sides, that may be engaged/disengaged by a screwdriver, but when individually actuated allow to simply pull off the lid from said other side of the chain link, by preformed constraint means with said recesses of the chain link.

This solution advantageously allows to avoid use of the screwdriver on both insertion points of the crosspiece on the link, thus limiting wear and simplifying its disengagement. However, once the lid is disengaged from said recess, it may be removed from the second recess in any position, and this makes very easy that one of these crosspieces, if not correctly engaged, or being worn, even on only one of the link sides, when disengaged on one side, may cause the crosspiece to fall off the chain link. This is a serious problem, because the accidental fall of elements may damage even seriously the entire chain structure, e.g. sticking on the chain. Moreover, as a very critical factor for the operation of a cable chain, the falling crosspieces may fall into the driving system where the chain is running, thus damaging, locking or jamming the system with considerable damages. This problem is highly felt by the technicians in this field, because this kind of damages might be very important as well as cost and time of maintenance and repair, which would cause far bigger burden in comparison with the replacement of a lid, with delays in the production line and so on.

As an example of the above mentioned prior art problems, document WO 00/63586 discloses a chain link comprising an openable element or horizontal crosspiece, on only one upper or lower link side, having such elastic characteristics as to be engaged and disengaged by pressure relative to said link sides, and with reference to the foregoing discussion, it is to be noted that the coupling points for said openable element are provided directly on the link body, in a rather invasive way in view of the coupling type, and consequently in case of extended use the link structure is easily subject to wear, and additionally the manual closing and opening operation causes great forces acting on the link for detaching and pressure inserting the closure member, this on the whole link body in spite of any contrary effort. In addition, if disengagement occurs by means of a tool, from the disclosure one may assume that the force acts on the link body, with the above cited disadvantages. Finally once one side of said closure member is opened, in view of the configuration of the closure member it is not possible to open said side beyond a certain angle of rotation, and moreover it is very important to note that there is no holding means preventing the closure member to detach from its seat, when it is already detached from the first seat of the opening side.

Likewise, document WO 2007/076987 discloses a chain link comprising an openable side like that described in the above discussed document, with the difference that here the openable side may be disengaged in various ways, and in a side hinged version, said openable side may be rotated by an angle more than 90° so as to achieve a good access to the link. However, excepting this advantage, the various above indicated disadvantageous and relevant aspects are still present, namely the system for engaging and disengaging said openable element is again implemented in the link body and the disengaging tools like screwdrivers are still straining on at least one side of the link. Moreover in a particularly relevant way, once one side of said closure member is opened, in view of the closure configuration, there are no holding means preventing the closure member to disengage from its seat when it is disengaged from the first seat, thus causing the above highlighted problems.

Document DE 102008015954 also discloses a chain link comprising only one openable side, which is C-shaped and increases considerably the inner room of the link channel. According to the configuration of said openable side, the engaging/disengaging system is disposed on the link body, thus also in this case for the opening/closing operation a strain is exerted on the link body, that may cause the already cited problems of wear, link failure and so on. This system comprises one hinge side and one release side. The system appears to be not very practical, because if the link would be full of cables above the upper link edge, at the opening stage the cables would certainly fall out from the link, but this aspect is not relevant to define the scope of the invention. Also in this case from the description one can assume that once one side of said closure member is opened, in view of the closure configuration, there is no holding means preventing the closure member to be released from the seat, when it is disengaged from the first seat, thus causing again the above discussed problems.

From what it is possible to deduce from description and drawings of this document, the openable member once opened or disengaged from one link side, remains in its seat connected on the other link side. The two link engaging ends of the closure member therefore are non-symmetrical, i.e. the engaging side and the rotation side are different, both on the link and on the means disposed on the closure member. Thus it appears that said closure member may be opened only from one side, and this could be inconvenient if for any technical requirement, it would be necessary to open on the other side.

At last the German utility model DE 202011004762 discloses a chain link according to the preamble of claim 1 comprising openable sides which are horizontal crosspieces directly engaged on the link body. This kind of engagement clearly appears very complex and provided with many locking, fixing elements and the like, with consequent weakness of the pieces and great manufacturing cost of the link. The locking areas comprise tongues and similar engagement elements, which are particularly prone to wear in use, the object of this disclosure in this case is to provide for a complete opening of the link channel, by rotating the crosspiece connected to a connection end of the link. Also in this case the closure mechanism is made in the link body and again, in a particularly relevant way, the problem of a complete disengagement/unlocking of the crosspiece is totally not taken into account.

The general object of the present invention is to provide for an element of a cable chain having opening and closure members, hereinafter also referred to as lid, which is not subject to easy wear or breakage of parts.

Thus it is an object of the present invention to provide for an element of a cable chain, having a lid which is stronger and consequently more durable with related obvious economical advantages.

Another object of the present invention is to provide for an element of a cable chain, having a lid that can be easily and readily rotated and extracted.

Still an object of the present invention is to provide for a lid that can be taken out indifferently from both sides in an easy way.

A further particularly important object of the present invention is to provide for a link and lid assembly having a safety mechanism against accidental lid unlocking.

Therefore an object of the present invention is to optimize the duration and reliability both structural and functional, of said lid for cable chain links.

Finally it is an object of the present invention to provide for a link and lid assembly having strong physical features and a reasonable cost.

These and further objects of the present invention will be provided by a cable chain element according to claim 1 comprising at least one crosspiece with at least one engaging side on at least one side of said chain element, said at least one crosspiece being disengageable in at least one preformed seat on said at least one chain side, provided with a reinforced portion, and said element, more particularly one link of said chain element, comprising a second preformed engaging seat on said chain element to which said crosspiece is further constrained, said first or second engaging area being adapted to act as a rotational constraint to open and close said crosspiece relative to said chain element, said crosspiece being able to be extracted from said second engaging seat, once said first crosspiece side is released from said first engaging area.

More particularly, said two or more preformed seats or housings comprise cutouts, made so as to constitute a step for insertion of the point of an unlocking tool such as a screwdriver. Said step area is the only point where it is possible to insert said tool to disengage said lid from said link and is a particular reinforced zone, specially designed to give strength to the lid and to allow a quick disengagement from the lid locking system, subjecting both the lid and the link to a minimal pressure force, thus avoiding that the link undergoes deformations.

Moreover, said housing is so configured as to be adapted to receive said lid, which has its insertion area designed for being rotatable in said housing by an angle of more than 90 degrees, thus allowing an easy and complete access to the chain channel. Moreover, said engagement system lid/housing is designed as to allow that the lid may be easily taken off the second seat of a second link, where the lid is rotatably engaged to allow access to the chain channel. When this lid is inclined by a predetermined angle, e.g. variable between 30° and 90° and preferably 45° (but it could be any angle suitable for the objects of the invention) in respect of said preformed housing made on said link, the lid may be taken off from said housing. In a still particularly advantageous way, when the lid is rotated by any other angle different from the present one (e.g. 45°), the lid remains mutually connected with said chain link.

Moreover, the recess made on the link, and the mutual coupling between the designed recess and crosspiece allow, in a particularly advantageous way, to make the parts with a strong structure, contrary to the thin or ductile structure of the tongue coupling. In addition, said recess is still more advantageously made in a particular shaped area of the reinforced link, and is preformed for being resistant to wear exerted by the lid opening tool.

Moreover, in a further advantageous way, when said crosspiece is engaged or fixed by coupling in said preformed recess, said coupling has a lateral, e.g. longitudinal area (which will be better illustrated in the accompanying drawings) having the function of guide for inserting the point of the release tool, said tool being the only point in which it is possible to insert the tool for releasing the lid end from the housing.

These and other characteristics and advantages of the chain element with crosspiece will become more apparent from the following detailed description of preferred embodiments according to the present invention, to be read making reference to the accompanying drawings, in which:
Fig. 1 shows a chain element according to a preferred embodiment of the present invention;
Figs. 2a and 2b show a crosspiece according to a preferred embodiment of the present invention, in perspective and lateral cross-sectional view, respectively;
Fig. 3 shows a link with preformed recess according to a preferred embodiment of the present invention;
Fig. 4 is a side sectional view of a chain element with the crosspiece inserted into the recess when the element is open; and
Fig. 5 shows an element of a preferred embodiment of the invention with closed lid(s).

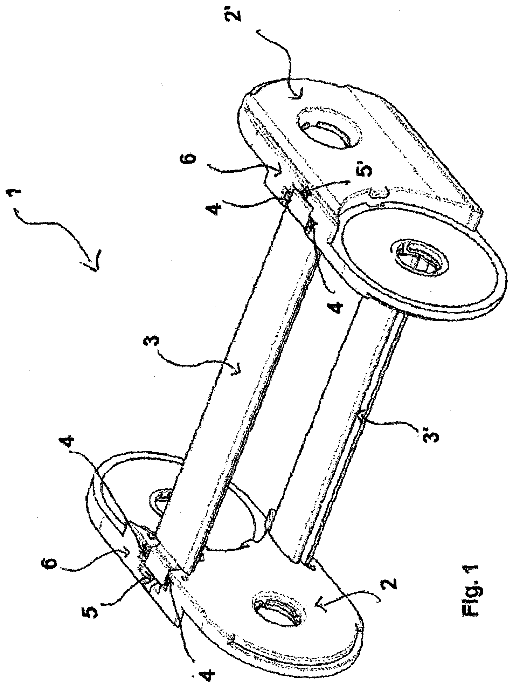

With reference to Fig. 1, a preferred embodiment of the present invention is shown, wherein a chain element 1 in this case comprises two side links 2, 2' connected to each other above and below by two crosspieces 3 and 3', respectively. Therefore said element 1 consists of four parts connected to each other so as to form said element 1 defining a housing or chain channel and adapted to be interconnected with a plurality of similar chain elements. Said crosspiece 3 or 3' (in figure 1 one can see the upper crosspiece 3) is connected to the first side link 2 and to the second side link 2' by engaging on coupling means made of materials with adequate elasticity, such as plastics of any composition known in the manufacture of cable chains, or for instance aluminum and the like. Said coupling means for the crosspieces 3, 3' are protrusions 4 preferably molded integral with said crosspiece 3, 3'. These protrusions 4 are so designed as to be adapted to be coupled with suitably shaped recesses 5, made on an upper or lower reinforced portion 6, 6' of said links 2, 2'.

In this particular embodiment of Fig. 1, the chain element 1 is fully modular and consists of links 2, 2' and crosspieces 3, 3'. However a possible alternative is to make said chain element as a monobloc or single piece in the form of U, closed at one longer side by an openable crosspiece 3 or 3'.

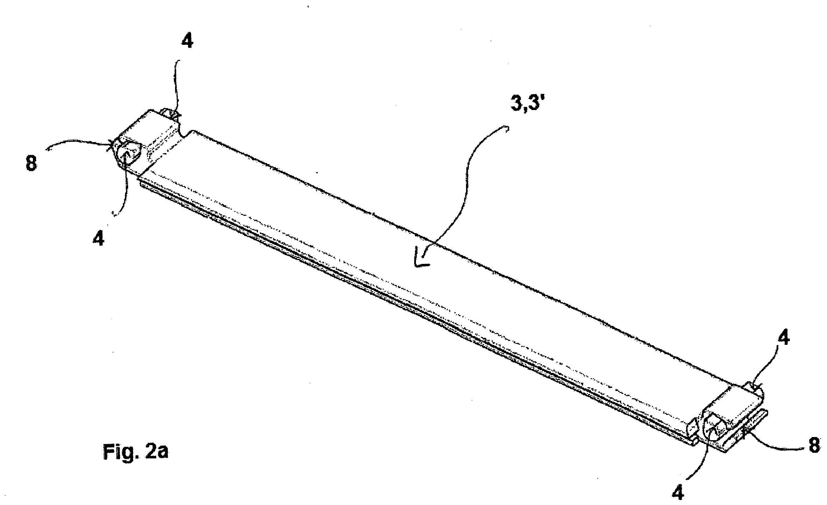

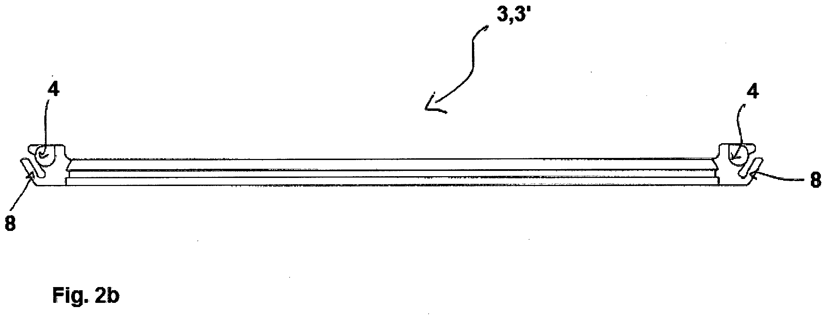

More particularly, for the detailed description of the operation of the chain element with crosspiece and safety mechanism, reference is made to Figs. 2a and 2b, in which one can see two good illustrations, in a perspective view and a longitudinal section respectively, of the crosspiece 3, 3' of the present invention, comprising protrusions 4 on the two terminal ends of the crosspiece, adapted to be coupled with said preformed recesses 5. Moreover said terminal portions of said crosspiece 3, 3' comprise shaped members 8, e.g. of a rounded shape, to be bayonet inserted with suitable shaped portions 7 of the recesses 5 for their coupling with said shaped members 8.

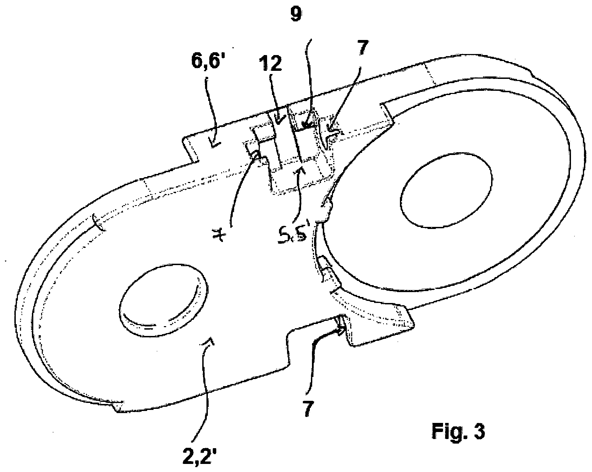

In addition, in order to complete the main parts of the chain element 1, made according to a preferred embodiment of the present invention, figure 3 shows a link 2, 2' in this case comprising two reinforced portions 6 on the upper and lower parts of links 2, 2' having recesses 5 for insertion of one end of said crosspiece 3, 3'. Said seat or recess 5, 5' is provided with two shaped cavities 7 for insertion of protrusions 4 and a notch 9 for the bayonet insertion of the shaped engaging members 8 of said crosspiece 3, 3'. Said crosspiece 3, 3' once disposed in said seat 5, is fixed by coupling of protrusions 4 with cavities 7.

It is to be noted that in the description of the present invention, the parts often are indicated with double reference numerals (e.g. 3, 3' and so forth) because as it clearly appears from description and drawings, this innovative lid is totally symmetrical, so with particular reference to document DE 102008015954, in an advantageous way both the opening portion and the possible release portion, as well as the direction of re-insertion into the chain link to return to the closed position, are totally indifferent, even with particular economic saving in the stage of designing and making the form and the mold of both crosspiece and links.

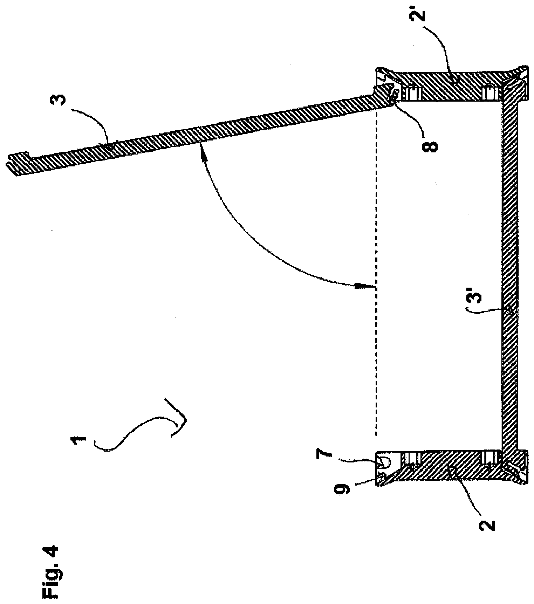

Finally, in figure 4 one can see a cross-sectional view of the chain element 1 of the present invention, wherein the upper crosspiece 3' is constrained by one link 2 and rotatably connected to a second link 2', on the chain element 1, thus allowing access to the inner channel of said chain.

As already pointed out, element 1 is here totally modular with two crosspieces 3, 3' and links 2, 2' provided with reinforced portions 6, where suitably shaped seats or recesses 5 are made, comprising cavities 7 for insertion and coupling of said protrusions 4, and cavity 9 for the bayonet insertion of said shaped engaging members 8 of said crosspiece 3, 3'.

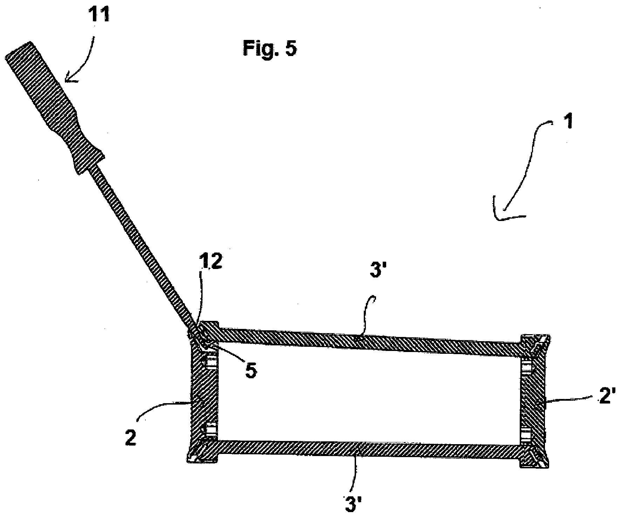

Then with reference to figures 4 and 5 one can see the same cross-sectional view of said chain element 1, shown in the closed position, namely when both crosspieces are integrally coupled fixedly to links 2, 2' of the chain, and the channel cannot be acceded from outside.

Figure 5 shows a possible disengaging tool such as a screwdriver, with a point adapted to be inserted into a cavity 12 formed by crosspiece 3 or 3' and the shaped seat 5 or 5'. In this case, once said first side of the crosspiece is disengaged from said seat, the crosspiece is rotatably connected to said means included in said second seat 5 and may be rotated integrally with said seat by an angle even greater than 90°, to attain a perfect and easy access to the inner channel of the chain, thus allowing the maintenance and replacement operations previously explained. It is to be noted that in a particularly advantageous way, said rotational constraint allows the crosspiece to remain securely fixed to said second seat 5. There is a single inclination angle of the crosspiece in respect of its horizontal position (relative to a horizontal plane, for instance as shown in Fig. 4) in which, according to its configuration during the molding stage the mutual coupling of the bayonet insertion between said cavity 9 and said shaped portion 8 for a predetermined angle of inclination e.g. of 45°, said crosspiece may be simply taken off from said second seat 5. For any other position or different angle, either the protrusions 4 or the configuration of the bayonet coupling 8, 9 do not allow the simple extraction of the crosspiece. It is apparent that said bayonet coupling 8, 9 produces in every respect an innovative safety system, allowing to rotate said crosspiece 3, 3' to have an easy access to the channel, without being compelled to take off the crosspiece.

Moreover, as already pointed out when said crosspiece remains disengaged from a joint seat, there will be no risk to become inadvertently detached, since said coupling 8, 9 has still the function of constraint, provided that in said detached position, a crosspiece will hardly reach said position.

In a still further advantageous way, as said crosspiece may be taken off even without using the screwdriver, wear which said lid undergoes is halved in respect of prior art systems, because only one side is stressed by the screwdriver. In a very particular advantageous way, the bayonet coupling allows to obtain said crosspiece rotatably constrained to said link, without risk that said crosspiece may inadvertently be disengaged and fall from said chain element, if the fixed coupling of one side of the crosspiece becomes worn or is not perfectly closed. This aspect is definitely relevant and fundamental for the safety of the cable chain, because it reduces to a minimum the risk of losing chain parts, namely crosspieces that could cause serious damages to the chain. Moreover said solution allows also to reduce use of parts due to their wear, thus having considerable savings of maintenance costs. Again it should be noted that the constraint parts made according to the invention, namely the protrusions 4 and the shaped portion 8, in a further advantageous way, have a much stronger structure relative to the usual prior art coupling tongues.

Finally, in still more advantageous way, said cavity 12 between crosspiece 2 and seat 5 is the only possible area adapted for insertion of the screwdriver point or other suitable tool, to exert pressure for releasing said crosspiece from said seat. In this way user is obliged to use said insertion cavity, that being properly preformed, reduces to a minimum the effort required to disengage the coupling, thus limiting the stress undergone by the chain element, and further limiting the possibility of damages that would otherwise occur because of forced unlocking steps and excess wear due to excess force required to make said unlocking operation.

The cable chain element of the present invention allows to obtain a safety system for said crosspieces, which may then be easily extracted, and with the special configuration of the parts, have a better resistance and durability in view of the strength of parts and the decidedly lower risk of their failure and wear. These and other variations and embodiment of the chain element according to the present invention, will be encompassed in the scope of protection herein disclosed. The parts like couplings, protrusions, engagements and all the shaped and preformed parts may be made of any material adapted for their use. It is further obvious that the inclination angle under which it is possible to extract said crosspiece from the bayonet coupling is variable and may be any inclination angle adapted for the purpose of the present invention and may be varied and variable according to the chain structure, any production requirement or on customer's demand, simply changing the required mold or any other suitable production means. Moreover the describes cavity 12 may also have a variable form according to the kind of release tool used, which could be for instance pointed, flat, elongated and so on, or even custom shaped according to the production requirements.

Therefore each of these elements may be made of any suitable material and may have alternative embodiment to the previously illustrated preferred ones, in which modifications and changes, for instance concerning the geometries selected for the individual mobile and fixed elements, the materials adopted for each member, and also the specifications of the operative system, may be made without however departing from the scope of protection of the present invention as defined in the appended claims.

## Claims

1. An energy chain element (1), comprising two side links (2, 2') connected to each other above and below by two crosspieces (3, 3') respectively, each one of the two ends of each said crosspieces (3,3') being releasable from corresponding preformed seats (5, 5') made on an upper or lower reinforced portion (6, 6') of said side links (2, 2'), each one of said seat (5, 5') being provided with two cavities (7) for insertion of protrusions (4) of each one of the two ends of each crosspiece (3, 3') and an engaging means (9) configured for constraining a shaped engaging member (8) of each one of the two ends of each crosspiece (3, 3') in the engaged position **characterized in that** said shaped engaging members (8) and said engaging means (9) are configured to act as a rotational constraint to open and close the corresponding end of the crosspiece (3, 3') with respect to said chain element (1), thereby acting as safety mechanism against accidental release when one end of each crosspiece (3, 3') is disengaged and rotated by a predetermined angle of junction to a predetermined release angle, said predetermined angle of junction being defined by the coupling of said engaging means (9) with said shaped engaging elements (8) and by coupling of said protrusions (4) with said cavities (7), acting as safety mechanism against accidental release when each crosspiece (3, 3') is rotated, and **in that** said shaped engaging member (8), is part of each crosspiece (3, 3'), wherein the predetermined release angle equals 45 degrees and is a single inclination angle of the crosspiece (3,3') in respect of its horizontal position where both ends of the crosspiece (3,3') are engaged with their corresponding preformed seats (5,5') at which said crosspiece (3,3') may be simply taken off from said second seat (5,5'), and wherein for any other position or different angle of the crosspiece (3,3'), either protrusions (4) or the configuration of the coupling (8,9) between the engaging member (8) and the engaging means (9) do not allow for a simple unrestricted extraction of the crosspiece (3,3').

2. The energy chain element (1) according to claim 1, wherein said seat (5) is symmetrical to said seat (5') and said two ends of the crosspiece (3, 3') are symmetrical each other.

3. The energy chain element (1), according to claim 1, wherein said coupling between said engaging means (9) and said shaped elements (8) is a bayonet fitting.

4. The energy chain element (1) according to claim 3, wherein said bayonet fitting allows a complete access to the inner channel of said link, by rotation in said seat (5) by an angle over 90°, without releasing said crosspiece (3, 3') from both seats (5, 5').

5. The energy chain element (1), according to claim 1, wherein said seat (5) comprises a cavity (12) for insertion of a suitably shaped removal tool (11).

6. The energy chain element (1), according to claim 5, wherein said cavity (12) is the only possible area adapted for insertion of the screwdriver point or other suitable tool, to exert pressure for releasing said crosspiece (3, 3') from said shaped seat (5, 5').

7. The energy chain element (1), according to the preceding claims, wherein said chain element (1) is of modular type and consists of three or more pieces.

8. The energy chain element (1), according to the preceding claims 1 to 6, wherein said chain element (1) consists of a single block piece and one crosspiece (3 or 3').

## Patentansprüche

1. Energiekettenelement (1) mit zwei Seitengliedern (2, 2'), die mittels zwei Querstücke (3, 3') oben bzw. unten einander verbunden werden, wobei jedes der beiden Enden der Querstücke (3, 3') von entsprechenden auf einem verstärkten obigen bzw. unteren Teil (6, 6') der Seitenglieder (2, 2') vorgeformten Sitzen (5, 5') abtrennbar sind, wobei jeder Sitz (5, 5') zwei Aussparungen (7) für den Einlass je eines Vorsprungs (4) der beiden Enden des Querstücks (3, 3') sowie ein Eingriffmittel (9) aufweist, und das Eingriffmittel (9) derart abgestalten ist, um ein geformtes Eingriffglied (8) jedes Endes der Querstücke (3, 3') in der eingegriffenen Stellung zu binden, **dadurch gekennzeichnet, dass** die geformtem Eingriffglieder (8) und das Eingriffmittel (9) als Wirbelbindung ausgebilten werden, um das entsprechende Ende des Querstücks (3, 3') gegenüber dem Kettenelement (1) zu öffnen bzw. Schließen, das heißt als Sicherheitseinrichtung gegen die zufällige Abtrennung, als ein Ende jedes Querstücks (3, 3') ausgelöst und von einem vorgegebenen Verbindungswinkel nach einem vorgegebenen Abtrennungswinkel geschwenkt wird, wobei der vorgegebene Verbindungswinkel von der Passung des Eingriffmittels (9) mit den geformten Eingriffglieder (8) sowie von der Kupplung der Vorsprünge (4) mit den Aussparungen (7) bestimmt wird, indem dies als Sicherheitseinrichtung gegen die zufällige Abtrennung auswirkt, als jedes Querstuck (3, 3') gedreht wird, sowie dadurch, dass das geformte Eingriffglied (8) Teil jedes Querstücks (3, 3') ist, wobei der vorgegebene Abtrennungswinkel 45° beträgt und der einzige Neigungswinkel des Querstücks (3, 3') gegenüber seinem waagrechten Lage ist, worin die beiden Enden des Querstücks (3, 3') mit ihren entsprechenden vorgeformten Sitzen (5, 5') eingegriffen werde, wodurch der Querstück (3, 3') aus seinem zweiten Sitz (5, 5') einfach herausgezogen werden kann, wobei in jeglicher verschiedener Stellung bzw. Winkel des Querstücks (3, 3'), die Vorsprünge (4) bzw. die Ausgestaltung der Kupplung (8, 9) zwischen dem Eingriffglied (8) und dem Eingriffmittel (9) keine einfache ausgelöste Abtrennung des Querstücks (3, 3') gestatten.

2. Energiekettenelement (1) nach Anspruch 1, worin der Sitz (5) mit dem Sitz (5') symmetrisch ist, und die beiden Enden des Querstücks (3, 3') miteinander symmetrisch sind.

3. Energiekettenelement (1) nach Anspruch 1, worin die Passung zwischen dem Eingriffmittel (9) und den geformten Eingriffgliedern (8) eine Bajonettkupplung ist.

4. Energiekettenelement (1) nach Anspruch 3, worin die besagte Bajonettkupplung einen kompletten Zugang an den Innenkanal des Kettenglieds durch Drehung im Sitz (5) um einen Winkel > 90° ohne Abtrennung des Querstücks aus den beiden Sitzen (5, 5') gestattet.

5. Energiekettenelement (1) nach Anspruch 1, worin der Sitz (5) eine Aussparung (12) aufweist, um ein geeigneterweise geformtes Entlastungswerkzeug (11) einzufügen.

6. Energiekettenelement (1) nach Anspruch 5, worin die besagte Aussparung (12) der einzige geeignete Bereich ist, um die Spitze eines Schraubziehers bzw, ein anderes geeignetes Werkzeug einzusetzen und Druck auszuüben, um das Querstück (3, 3') aus dem geformten Sitz (5, 5') auszulösen.

7. Energiekettenelement (1) nach den vorhergehenden Ansprüchen, worin das Kettenelement (1) ein modularer aus drei bzw. mehreren Teilen bestehender Baustein ist.

8. Energiekettenelement (1) nach den vorhergehenden Ansprüchen 1 -6, worin das Kettenelement (1) aus einem einzigen Monoblockausführung und einem Querstück (3 bzw. 3') besteht.

## Revendications

1. Élément (1) de chaîne porte-câbles, comprenant deux mailles latéraux (2, 2') connectées entre elles respectivement dessus et dessous par deux traverses (3, 3'), chaque des deux extrémités de chaque traverse (3, 3') étant détachable des sièges préformés correspondants (5, 5') réalisés sur une partie renforcée supérieure ou inférieure (6, 6') des dites mailles latéraux (2, 2'), chaque des dits sièges (5, 5') étant muni de deux cavités (7) pour insérer des saillies (4) de chaque des deux extrémités de chaque traverse (3, 3'), et un moyen d'engagement (9) configuré pour lier un organe d'engagement façonné (8) pour chaque des deux extrémités de chaque traverse (3, 3') dans la position engagée, **caractérisé en ce que** les dits organes d'engagement façonnés (8) et le dit moyen d'engagement (9) sont configurés pour fonctionner comme liaison rotationnelle pour ouvrir ou fermer l'extrémité correspondante de la traverse (3, 3') avec l'élément (1) de chaîne, pour fonctionner comme mécanisme de sécurité contre le détachement accidentel, lorsque l'extrémité de chaque traverse (3,3') est dégagée et tournée par un angle de jonction prédéterminé, à un angle de détachement prédéterminé, le dit angle de jonction prédéterminé étant défini par l'accouplement des dites saillies (4) avec les dites cavités (7), en agissant comme mécanisme de sécurité contre le détachement accidentel lorsque chaque traverse (3, 3') est tournée, et **en ce que** le dit organe d'engagement façonné (8) fait partie de chaque traverse (3, 3'), dont l'angle de détachement prédéterminé est de 45 degrés, étant le seul angle d'inclinaison de la traverse (3, 3') par rapport à sa position horizontale, où les deux extrémités de la traverse (3, 3') sont engagés avec leurs sièges préformés correspondants (5, 5'), où la dite traverse (3, 3') peut être simplement extraite du deuxième siège (5, 5'), et dans n'importe quel autre position ou angle différent de la traverse (3, 3'), les saillies (4) ou la configuration de l'accouplement (8,9) de l'organe d'engagement (8) avec le moyen d'engagement (9) ne permettent pas la simple extraction dégagée de la traverse (3, 3').

2. Élément (1) de chaîne porte-câbles selon la revendication 1, dont le dit siège (5) est symétrique au dit siège (5'), et les deux extrémités de la traverse (3, 3') sont symétriques entre elles.

3. Élément (1) de chaîne porte-câbles selon la revendication 1, dont le dit accouplement du moyen d'engagement (9) avec les organes façonnés (8) est un joint à baïonnette.

4. Élément (1) de chaîne porte-câbles selon la revendication 3, dont le dit joint à baïonnette permet un accès complet au canal intérieur de la maille, par rotation dans le dit siège (5) avec un angle supérieur à 90 degrés, sans détacher la traverse (3, 3') des deux sièges (5, 5').

5. Élément (1) de chaîne porte-câbles selon la revendication 1, dont le dit siège (5) comprend une cavité (12) pour insérer un outil (11) d'enlèvement opportunément façonné.

6. Élément (1) de chaîne porte-câbles selon la revendication 5, dont la dite cavité (12) est le seul endroit apte pour insérer la pointe d'un tournevis ou d'autre outil approprié pour exercer la pression nécessaire pour détacher la traverse (3,3') du dit siège façonné (5, 5').

7. Élément (1) de chaîne porte-câbles selon les revendications précédentes, dont le dit élément de chaîne (1) est modulaire et constitué par trois ou plusieurs pièces.

8. Élément (1) de chaîne porte-câbles selon les revendications précédentes de 1 à 6, dont le dit élément de chaîne (1) est constitué par un monobloc unique et une traverse (3 ou 3').
